# EUROPEAN PATENT SPECIFICATION

(11) **EP 4 101 888 B1**
(45) Date of publication and mention of the grant of the patent: **24.04.2024**
(21) Application number: 21178391.5
(22) Date of filing: 08.06.2021
(51) Int. Cl.: C08L 23/08

(54) **PLASTIC MODIFIER COMPRISING NATURAL RUBBER, PLASTIC ARTICLE AND ITS USE**
KUNSTSTOFFMODIFIKATOR MIT NATURKAUTSCHUK, KUNSTSTOFFARTIKEL UND SEINE VERWENDUNG
MODIFICATEUR DE PLASTIQUE COMPRENANT DU CAOUTCHOUC NATUREL, ARTICLE EN PLASTIQUE ET SON UTILISATION

(43) Date of publication of application: 14.12.2022
(73) Proprietor: Proquitec Indústria de Produtos Químicos S/A, 06730-000 Vargem Grande Paulista (BR)
(72) Inventor: NASSER, Sidnei Winston, 06730-000 VARGEM GRANDE PAULISTA (BR)
(74) Representative: ZBM Patents - Zea, Barlocci & Markvardsen

(56) References cited:
- CN-A- 104 031 311
- US-A- 5 719 198

## Description

### FIELD OF THE INVENTION

This invention refers to a plastic modifier, in general, formed from a polymer composition comprising natural rubber prepared with olefins and to recycled plastics comprising the referred modifier, able to restore and improve the physical and mechanical properties of virgin and recycled plastics.

### INVENTION FUNDAMENTALS

Several additives and plastic and polymer composition modifiers, in general, are known from the state-of-the-art. The modifiers and additives have a number of functions and are subdivided into categories, according to their functions and characteristics. Thus, the following are additives and modifiers: stabilizers, plasticizers, lubricants, impact modifiers, flame retardants, nucleating agents, among others.

Thus, the additives and modifiers allow that a same polymer can be employed for different purposes and which provide different uses for a final composition comprising modifiers.

In general, the modifiers must present some characteristics to be technical feasible, such as: efficiency for the function it has to perform, stability for processing and for the operational conditions, easy dispersion, without migration to the polymer surface, non-toxicity, low cost and non-impairment of the polymer properties and characteristics.

In general, the additivation occurs due to two main reasons: the need to change the physical and mechanical properties of a material or the need to provide a polymer with increased stability, whether during the processing or during the operation.

Among the modifiers more commonly used in the art are the Nitrile Rubber (NBR) and EPDM (Ethylene Propylene Diene Rubber). With this respect, the nitrile rubber (NBR) shows excellent resistance to oil and abrasion.
Its mixture with low unsaturation index rubbers, such as the ethylene-propylene-diene terpolymer (EPDM) or the butyl rubber (IIR), is an attractive way to develop new materials, more resistant to the action of heat, oxygen and ozone. However, the physical properties of such mixtures are generally inferior to those expected from the properties or each of the elastomers, particularly due to the differences in the components' polarity and unsaturation content.

Such modifier options are composed of materials and by exclusively synthetic means, requiring the use of solvents, for example, in their productions and generating, thus, disadvantages from the environmental point-of-view.

### OBJECTIVES OF THE INVENTION

One of the objectives of this invention is to provide a plastic modifier formed from a polymer composition comprising natural rubber (NR).

Another objective of this invention is to provide a plastic modifier able to allow the recycling of plastics of different types and origin, when duly added to them, restoring or providing improved physical and mechanical properties.

It is also an objective of this invention to provide a sustainable plastic modifier, comprising natural rubber in its composition.

One more objective of this invention is to provide a plastic modifier which, when added to any plastic, enables the injection process in conventional thermoplastic injectors or extruded in conventional thermoplastic extruders.

It is further another objective of this invention to offer a plastic modifier which provides the plastic it is added to with high resiliency, flexural strength and stretching resistance, resistance to abrasion, chemical resistance, resistance to low temperature, improved esthetic and rubbery aspects.

It is another objective of this invention to offer a plastic modifier which provides the recycles plastics with properties that are similar to those of the virgin plastic, with capacity of memory and high resiliency.

### BRIEF DESCRIPTION OF THE INVENTION

This invention refers to a plastic modifier comprising natural rubber, which is formed from a polymer composition comprising: between 10% and 35%, in weight, of non-vulcanized natural rubber (NR); between 5% and 35% in weight, of alpha-olefin ethylene copolymer, between 10% and 70%, in weight, of ethylene vinyl acetate copolymer with VA content of 19%; between 10% and 70%, in weight, of ethylene vinyl acetate copolymer with VA content of 28%. The modifier further comprises, in its composition, between 1% to 5%, in weight, of a homogenizer, between 1% and 5%, in weight, of a flow auxiliary, between 1% and 15%, in weight, of a reinforcing load of silicon dioxide, of up to 15%, in weight, of a mineral load of talc, of up to 15%, in weight, of a mineral load of calcium carbonate, of up to 15%, in weight, and between 1% and 25%, in weight, of a paraffin plasticizer.

The said modifier preferably comprises one third, in weight, of non-vulcanized natural rubber (NR) with respect to the said modifier composition.

Concerning the homogenizer, HOMOGETEC is preferably used. The preferred flow auxiliary, in its turn, is FLUXTEC 32.

The said modifier is added to a plastic, preferably selected among polypropylene (PP), polyethylene (PE), ABS, polyethylene terephthalate (PET) and polystyrene (PS), in ratios between 3% and 50%, in volume, of the final plastic composition comprising the modifier.

Also objects of this invention are plastic articles comprising the plastic modifier of this invention in ratios between 3% and 50%, in volume, of the final plastic composition comprising the modifier.

Further, an object of this invention is the use of the plastic modifier being added to a plastic in ratios between 3% and 50%, in volume, of the final plastic composition comprising the modifier.

### DETAILED DESCRIPTION OF THE INVENTION

This invention refers to a plastic modifier formed from a polymer composition, able to provide a plastic it is added to significantly increasing the impact resistance, flexibility, stretching and resistance to low temperature, in addition to the capacity of memory and high resiliency.

With this respect, this plastic modifier allows the modification and modification of plastics, in general, being used as additives for virgin plastics or plastics such as polypropylene (PP), polyethylene (PE), ABS, polyethylene terephthalate (PET), polystyrene (PS) and other types of plastics.

Evidently, according to the quantity of modifier use, the plastic will present differentiated properties an characteristics, the modifications of which are intrinsically related to the percentages of modifiers incorporated to any plastic.

Concerning the plastic modifier of this invention, which is formed from a polymer composition, especially comprising natural rubber with olefins. The modifier preparation counts on the preparation of the rubber with olefins and, further, by including, to the natural rubber and to the olefins, resin-based compatibilizers and flow auxiliaries, so as to form the composition basis of the plastic modifier according to the this invention.

Differently from the plastic modifiers commonly used in the industry, such as Nitrile Rubber (NBR) and EPDM (Ethylene Propylene Diene Rubber), the plastic modifier of this invention, for comprising natural rubber in its composition, is, on an unprecedented way, a renewable and sustainable modifier, presenting green and ecological appeal.

Thus, by decreasing the need to use virgin raw material, the entire polluting chain involved in the production of virgin plastic resins is consequently reduced.

In view of the above considerations, the plastic modifier is formed by a polymer composition comprising between 10% and 35%, in weight, or non-vulcanized natural rubber, between 5% and 35%, in weight, of alpha-olefinethylene copolymer, between 10% and 70%, in weight, of ethylene vinyl acetate copolymer with VA content of 19%, between 10 and 70%, in weight, of ethylene vinyl acetate copolymer with VA content of 28%, in addition to 1% to 5%, in weight, of a homogenizer, between 1% and 5%, in weight, of flow auxiliaries, between 1% and 15%, in weight, of a reinforcing load of silicon dioxide and between 1% and 25%, in weight, of up to 15%, in weight, of a mineral load of talc, of up to 15%, in weight, of a mineral load of calcium carbonate, of up to 15%, in weight, of paraffin plasticizer.

Although a number of flow auxiliary and homogenizing agents can be used, it is preferred to use component FLUXTEC 32 as a flow auxiliary, produced and marketed by Proquitec Indústria, Distribuição e Representação, as well as it is preferred to use component HOMOGETEC MTC as a homogenizing agent - also produced and marketed by Proquitec.

Concerning the alpha-olefin ethylene copolymer, the referred copolymer is preferably selected from one among TAFMER and ENGAGE (as commercially known).

The non-vulcanized natural rubber, used in the ranges of 10% and 35%, in weight, can be natural rubber of several grades such as, for example, types 3L, GEB, Pale Crepe, SMR, among others. The addition of natural rubber to the composition provides the material with rubbery, elasticity, resiliency, Grip (adherence to the substrate) and abrasion characteristics.

Preferably, the natural rubber corresponds to one third, in weight, among the total components which form the plastic modifier according to this invention.

The plastic modifier composition according to the invention having been described, the physical and mechanical properties of the referred modifier are presented below:

| **Property** | **Nominal** | **Method** |
|---|---|---|
| Density | 1.035 +/- 0.03 g/cm³ | ASTM D792 |
| Melt Point (190°/2.16kg) | 3.60+/- 0.3 g/10 min | ASTM D1238 |
| Mooney Viscosity (ML 1+4 to 120°C) | 16.9 +/- 5 MU | ASTM D1646 |
| Tensile Strength (module 100%) | 6.88 Mpa | ASTM D412 |
| Tensile Strength | 10.88 MPa | ASTM D412 |
| Stretching | 700% | ASTM D412 |
| Tearing | 36.75 kN/m | ASTM D624 |
| Shore A Hardness | 72 pts | ASTM D2240 |
| Shore D Hardness | 20 pts | ASTM D2240 |
| Resistance to low temperature | -40°C | ASTM D1329 |

Thus, the plastic modifier according to this invention is added to plastics so as to compose between 3% and 50%, in weight, of the total composition of plastic and modifier, depending on the properties one desires to provide to the plastic and also depending on the type of plastic the modifier is added to.

The addition of high percentages of such plastic modifier (above 50%, in weight), enables the plastic to be recycled more times without losing its properties, such as stretching, for example, in the recycling process.

The addition of the plastic modifier according to this invention to plastics enables the recycling of the same, which have their physical and mechanical properties modified. With this respect, in addition to the already property modifications, the presence of the plastic modifier leads to an energy economy, once the plastics comprising the modifier according to this invention are injected at a lower injection temperature compared to the common plastics, without addition of the referred modifier.

In addition, the addition of the modifier of this invention provides rubbery aspect and better finishing to the plastic articles manufactured from a common plastic composition comprising the said modifier.

Further, the use of the additive enables rigid plastics and those of easy rupture to become extremely flexible and rubbery, once the natural rubber has a long carbon chain, which changes the material characteristics and properties.

There's also a significant improvement in the resistance to low temperature of the plastics when combined with the modifier of this invention, once the presence of natural rubber provides excellent flexibility properties to the plastic under use conditions or up to - 40°C.

Among illustrative examples of uses and applications of the plastic modifier according to this invention, the following examples below can be considered.

### Example 1

To polypropylene (PP), 50% in weight, the modifier of this invention is added, also at 50%, in weight. From this composition, it is possible, by means of conventional thermoplastic injection methods, to obtain highly rigid and flexible plastic articles, replacing in many applications (uses for works up to 130°C) Polyamide (PA) 66 / Nylon 66. In addition to the cost decrease, this composition allows a significant reduction in the injection temperature, once Polyamide 66 is injected at temperatures higher than 260°C and required hydration in order to increase its flexibility. The Polypropylene 50% / modifier 50% combination allows to eliminate the hydration process and reduction of the injection temperature to 190°C.

From the injection of this final composition, the following can be obtained: bushings, connections, seals, engineering plastics, connectors, circuit breakers.

### Example 2

The modifier of this invention is added to polypropylene up to 30% in volume. The composition, by means of common thermoplastic injection processes, may form plastic articles, such as: chairs, bumpers, boxes, crates, packages, lids, tables, pallets, frames, flooring, engineering plastics, connections, tubs, plastics, in general.

### Example 3

The modifier up to 5% in volume added to polypropylene showed, in tests conducted according to the common standards described in this report an increased stretching from 50% to 100%.

By increasing the quantity of modifier from 5% to 10%, in volume, a stretching variation from 50% to 125% was determined, also presenting decreased hardness in modifier ranges of more than 5%.

### Example 4

The modifier up to 30% in volume added to polyethylene plastics may give origin to: pallets, toilet seats, helmets, packages, lids, protectors, toys, industrial boxes, plastics, in general.

### Example 5

The modifier up to 30% in volume added to polystyrene (PS) plastics may give origin to: coatings, combs, hangers, circuit breakers, trays, plastics in general.

### Example 6

The modifier up to 30% in volume added to ABS plastics may give origin to: furniture, home appliances, grids, panels, helmets, electronic products, motorcycle fairing and plastics in general.

## Claims

1. Plastic modifier comprising natural rubber **characterized by** the fact that it is formed from a polymer composition comprising:
between 10% and 35%, in weight, of a non-vulcanized natural rubber;
between 5% and 25%, in weight, of an alpha-olefin ethylene copolymer
between 10% and 70%, in weight, of ethylene vinyl acetate copolymer with VA content of 19%;
between 10% and 70%, in weight, of ethylene vinyl acetate copolymer with VA content of 28%;
where the referred plastic modifier is added to a plastic in ratios between 3% and 50%, in volume, of the final plastic composition comprising the modifier.

2. Modifier, according to claim 1, **characterized by** the fact that it preferably comprises one third, in weight, of non-vulcanized natural rubber with respect to the said modifier composition.

3. Modifier, according to claim 1, **characterized by** the fact that it further comprises between 1% to 5%, in weight, of a homogenizer.

4. Modifier, according to claim 1, **characterized by** the fact that it further comprises between 1% and 5%, in weight, of a flow auxiliary.

5. Modifier, according to claim 1, **characterized by** the fact that it further comprises between 1% and 15%, in weight, of a reinforcing load of silicon dioxide.

6. Modifier, according to claim 1, **characterized by** the fact that it further comprises up to 15%, in weight, of a mineral load of talc, of up to 15%, in weight.

7. Modifier, according to claim 1, **characterized by** the fact that it further comprises up to 15%, in weight, of a mineral load of calcium carbonate.

8. Modifier, according to claim 1, **characterized by** the fact that it further comprises 1% and 25%, in weight, of a paraffin plasticizer.

9. Modifier, according to claim 3, **characterized by** the fact that the homogenizer is HOMOGETEC.

10. Modifier, according to claim 4, **characterized by** the fact that the flow auxiliary is FLUXTEC 32.

11. Plastic article **characterized by** comprising the plastic modifier of the type defined in any of claims 1 to 10 at ratios between 3% and 50%, in volume, of the final plastic composition comprising the modifier.

12. Article, according to claim 11, **characterized by** the fact that the plastic is one among polypropylene (PP), polyethylene (PE), ABS, polyethylene terephthalate (PET) and polystyrene (PS).

13. Use of the plastic modifier of the type defined in any of claims 1 to 10 **characterized by** the fact that it is added to a plastic at ratios between 3% and 50%, in volume, of the final plastic composition comprising the modifier.

## Patentansprüche

1. Kunststoffmodifikator umfassend Naturkautschuk, **dadurch gekennzeichnet, dass** er aus einer Polymerzusammensetzung gebildet ist, die Folgendes umfasst:
zwischen 10 und 35 Gew.- % eines nicht vulkanisierten Naturkautschuks;
zwischen 5 und 25 Gew.- % eines alpha-Olefin-Ethylen-Copolymers;
zwischen 10 und 70 Gew.- % Ethylen-Vinylacetat-Copolymer mit einem VA-Gehalt von 19 %;
zwischen 10 und 70 Gew.- % Ethylen-Vinylacetat-Copolymer mit einem VA-Gehalt von 28 %;
wobei der genannte Kunststoffmodifikator einem Kunststoff in Verhältnissen zwischen 3 % und 50 % des Volumens der endgültigen Kunststoffzusammensetzung, die den Modifikator umfasst, zugesetzt wird.

2. Modifikator nach Anspruch 1, **dadurch gekennzeichnet, dass** er vorzugsweise ein Drittel, bezogen auf das Gewicht, des nicht vulkanisierten Naturkautschuks in Bezug auf die Modifikatorzusammensetzung umfasst.

3. Modifikator nach Anspruch 1, **dadurch gekennzeichnet, dass** er ferner zwischen 1 und 5 Gew.- % eines Homogenisators umfasst.

4. Modifikator nach Anspruch 1, **dadurch gekennzeichnet, dass** er ferner zwischen 1 und 5 Gew.- % eines Fließhilfsmittels umfasst.

5. Modifikator nach Anspruch 1, **dadurch gekennzeichnet, dass** er ferner zwischen 1 und 15 Gew.- % einer verstärkenden Ladung von Siliziumdioxid umfasst.

6. Modifikator nach Anspruch 1, **dadurch gekennzeichnet, dass** er ferner bis zu 15 Gew.- % einer mineralischen Ladung an Talkum von bis zu 15 Gew.- % enthält.

7. Modifikator nach Anspruch 1, **dadurch gekennzeichnet, dass** er ferner bis zu 15 Gew.- % einer mineralischen Ladung an Kalziumkarbonat enthält.

8. Modifikator nach Anspruch 1, **dadurch gekennzeichnet, dass** er ferner 1 Gew.- % und 25 Gew.- % eines Paraffin-Weichmachers umfasst.

9. Modifikator nach Anspruch 3, **dadurch gekennzeichnet, dass** der Homogenisator HOMOGETEC ist.

10. Modifikator nach Anspruch 4, **dadurch gekennzeichnet, dass** das Fließhilfsmittel FLUXTEC 32 ist.

11. Kunststoffartikel, der **dadurch gekennzeichnet ist, dass** er den Kunststoffmodifikator des in einem der Ansprüche 1 bis 10 definierten Typs in Verhältnissen von zwischen 3 % und 50 % des Volumens der endgültigen Kunststoffzusammensetzung umfassend den Modifikator umfasst.

12. Artikel nach Anspruch 11, **dadurch gekennzeichnet, dass** der Kunststoff einer aus Polypropylen (PP), Polyethylen (PE), ABS, Polyethylenterephthalat (PET) und Polystyrol (PS) ist.

13. Verwendung des Kunststoffmodifikators des in einem der Ansprüche 1 bis 10 definierten Typs, **dadurch gekennzeichnet, dass** er einem Kunststoff in Verhältnissen von zwischen 3 % und 50 % des Volumens der endgültigen Kunststoffzusammensetzung umfassend den Modifikator zugesetzt wird.

## Revendications

1. Modificateur de matière plastique comprenant du caoutchouc naturel **caractérisé par le fait qu'**il est formé à partir d'une composition polymère comprenant :
entre 10 % et 35 %, en poids, d'un caoutchouc naturel non vulcanisé ;
entre 5 % et 25 %, en poids, d'un copolymère d'éthylène alpha-oléfine ;
entre 10 % et 70 %, en poids, de copolymère d'éthylène acétate de vinyle avec une teneur en AV de 19 % ;
entre 10 % et 70 %, en poids, de copolymère d'éthylène acétate de vinyle avec une teneur en AV de 28 % ;
où le modificateur de matière plastique référencé est ajouté à un plastique dans des rapports compris entre 3 % et 50 %, en volume, de la composition de matière plastique finale comprenant le modificateur.

2. Modificateur, selon la revendication 1, **caractérisé par le fait qu'**il comprend de préférence un tiers, en poids, de caoutchouc naturel non vulcanisé par rapport à ladite composition de modificateur.

3. Modificateur, selon la revendication 1, **caractérisé par le fait qu'**il comprend en outre entre 1 % et 5 %, en poids, d'un homogénéisateur.

4. Modificateur, selon la revendication 1, **caractérisé par le fait qu'**il comprend en outre entre 1 % et 5 %, en poids, d'un auxiliaire d'écoulement.

5. Modificateur, selon la revendication 1, **caractérisé par le fait qu'**il comprend en outre entre 1 % et 15 %, en poids, d'une charge de renforcement de dioxyde de silicium.

6. Modificateur, selon la revendication 1, **caractérisé par le fait qu'**il comprend en outre jusqu'à 15 %, en poids, d'une charge minérale de talc, de jusqu'à 15 %, en poids.

7. Modificateur, selon la revendication 1, **caractérisé par le fait qu'**il comprend en outre jusqu'à 15 %, en poids, d'une charge minérale de carbonate de calcium.

8. Modificateur, selon la revendication 1, **caractérisé par le fait qu'**il comprend en outre 1 % et 25 %, en poids, d'un plastifiant de paraffine.

9. Modificateur, selon la revendication 3, **caractérisé par le fait que** l'homogénéisateur est HOMOGETEC.

10. Modificateur, selon la revendication 4, **caractérisé par le fait que** l'auxiliaire d'écoulement est FLUXTEC 32.

11. Article en matière plastique **caractérisé en ce qu'**il comprend le modificateur de matière plastique du type défini dans l'une quelconque des revendications 1 à 10 à des rapports compris entre 3 % et 50 %, en volume, de la composition de matière plastique finale comprenant le modificateur.

12. Article, selon la revendication 11, **caractérisé par le fait que** le plastique est l'un parmi le polypropylène (PP), le polyéthylène (PE), l'ABS, le polyéthylène téréphtalate (PET) et le polystyrène (PS).

13. Utilisation du modificateur de matière plastique du type défini dans l'une quelconque des revendications 1 à 10, **caractérisé par le fait qu'**il est ajouté à un plastique dans des rapports compris entre 3 % et 50 %, en volume, de la composition plastique finale comprenant le modificateur.
